# EUROPÄISCHE PATENTSCHRIFT

(11) **EP 3 790 267 B1**
(45) Veröffentlichungstag und Bekanntmachung des Hinweises auf die Patenterteilung: **17.12.2025**
(21) Anmeldenummer: 19195923.8
(22) Anmeldetag: 06.09.2019
(51) Int. Cl.: H04N 1/60, H04N 1/387, G01J 3/52

(54) **VERFAHREN ZUR AUTOMATISIERTEN ERSTELLUNG VON FARBKARTEN**
METHOD FOR THE AUTOMATED PRODUCTION OF COLOR CARDS
PROCÉDÉ D'ÉLABORATION AUTOMATIQUE DE CARTES DE COULEURS

(43) Veröffentlichungstag der Anmeldung: 10.03.2021
(73) Patentinhaber: GMG GmbH & Co. KG, 72072 Tübingen (DE)
(72) Erfinder: Wurster, Jürgen, 72135 Dettenhausen (DE); Schmidt, Rainer, 72076 Tübingen (DE); Zehnder, Jens, 70794 Filderstadt (DE); Betz, Johannes, 72074 Tübingen (DE); Renftle, Frank, 72135 Dettenhausen (DE)
(74) Vertreter: Rausch, Michael

(56) Entgegenhaltungen:
- WO-A1-2010/024944
- US-A1- 2008 111 997
- US-A1- 2013 289 941
- US-B1- 7 643 036

## Beschreibung

Die vorliegende Erfindung betrifft ein Verfahren sowie eine Vorrichtung zur automatisierten Erstellung von Farbkarten.

Farbkarten sind Druckerzeugnisse. Sie können für jede Farbe erstellt werden. Farben eines umgrenzten Farbsystems (z.B. RAL) werden auch in sogenannten Farbfächern zusammengestellt. Eine Farbkarte zeigt die Farbe zur optischen Wahrnehmung, meist in Bezug zu bestimmten Vorgaben, wie beispielsweise das Drucksystem.

In verschieden Bereichen der Druckbranche werden sogenannte Farbkarten eingesetzt, um die erzielbare Wiedergabe einer Sonderfarbe dem Druckeinkäufer (Brand) zu kommunizieren. Die Farbkarten werden andererseits auch eingesetzt, um den Druckprozess einzurichten bzw. zu kontrollieren. In allen Fällen dienen sie als visuelle Referenz. Eine Farbkarte enthält neben einem Druck der Farbe auch weitere textuelle Informationen, wie z.B. Identifikationsnummer (Name) der Farbe, Kunde, Datum und ähnliches.

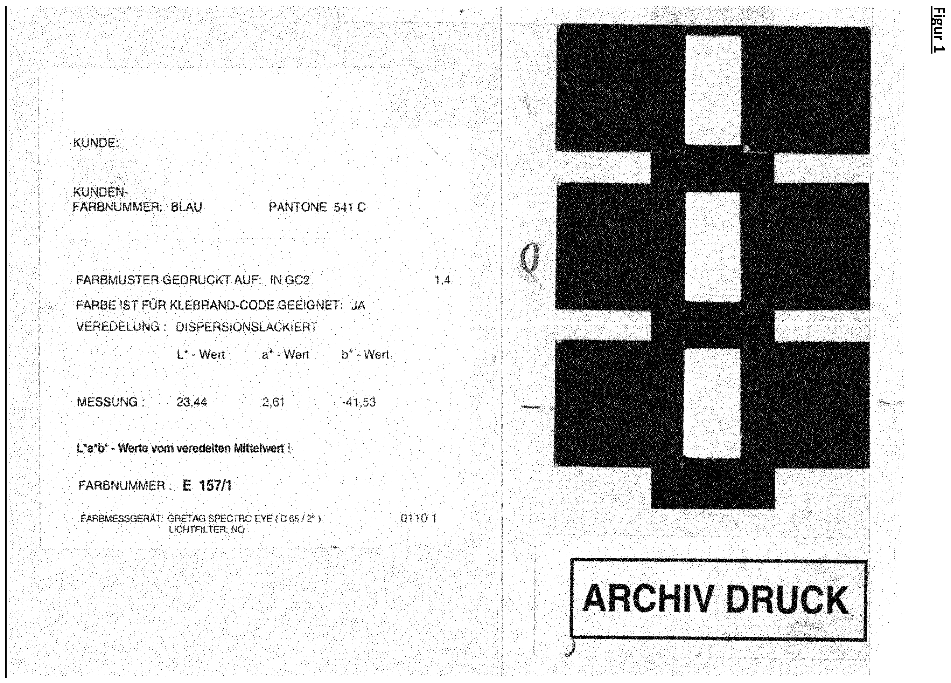

Figur 1 zeigt beispielhaft eine Farbkarte nach dem Stand der Technik. Sie zeigt eine Farbe in bestimmten Endzuständen und Informationen über Details der Herstellung sowie Archivinformationen.

Sonderfarben werden im Gegensatz zu CMYK Druckdaten häufig als Markenfarben eingesetzt, das heißt sie sind selbst einem bestimmten Hersteller und/oder Produkt zugeordnet und haben Eigentümlichkeit und Wiedererkennungswert. Sie kommen auch dann zum Einsatz, wenn im Druckprodukt graphische Elemente (Texte, Logos, Zeichnungen) abgebildet werden. Eine einzelne Druckfarbe (Sonderfarbe) erzeugt ein homogeneres Druckbild, als eine Mischung aus mehreren Prozessfarben (CMYK). Darüber hinaus lassen sich buntere Farben darstellen als beim Mischen aus Prozessfarben. Die Sonderfarben werden aus Grundfarben (gelösten Pigmenten) rezeptiert. Die Grundfarben unterscheiden sich je nach Hersteller der Farbe und verwendetem Druckverfahren bzw. chemischen oder physikalischen Anforderungen an die Farbe. Am Ende dieses Rezeptierungsprozesses steht ein Farbrezept, also die Angabe des prozentuellen Mischverhältnisses der Grundfarben. Das erreichte Ergebnis wird auf eine Farbkarte gedruckt und dient dann als visuelle Referenz. Am Anfang des Rezeptierungsvorgangs steht eine Wunschvorstellung über die Farbe in mannigfacher Form: z.B. Spektrum der Farbe, Lab Wert der Farbe oder auch nur ein physikalisches Beispiel.

Farbkarten werden, bis auf sehr wenige Ausnahmen in der jüngeren Vergangenheit, manuell gefertigt.

Für den Rezeptierungsprozess ist neben dem verwendeten Farbsystem des Druckfarbenherstellers und dem Druckverfahren auch das zu bedruckende Medium von Bedeutung. Um eine bestimmte Farbwirkung auf einem hochweißen Substrat zu erzeugen kommt eine andere Mischung der Grundfarben zu Einsatz, als wenn diese Farbe für einen bräunlichen Karton realisiert werden muss. Evtl. ist die Referenz auch auf einem bräunlichen Medium nicht zu erreichen.

Da in einigen Bereichen der Druckindustrie die verwendeten Medien nicht standardisiert sind und sich so sehr häufig in ihrer Färbung bzw. in ihren Druckeigenschaften unterscheiden, werden dort täglich Farbrezepte und dann Farbkarten erstellt. Diese Bereiche sind zum Beispiel das Bedrucken von Wellpappe (für Umverpackungen), die Produktion von Faltschachteln oder auch Etiketten.

Am Anfang steht die Auswahl z.B. der Markenfarbe, dann folgt die Auswahl des Bedruckstoffes, des Druckverfahren und des Farbstoffes. Im Farblabor oder der Farbküche werden dann in kleiner Menge die Farbe gemischt und mit einem Handabroller auf das Druckmedium aufgebracht. Das erreichte Ergebnis wird spektral Vermessen. Evtl. sind danach weitere Modifikationen an der Mischung notwendig bis der gewünschte Zielfarbton erreicht ist. Diese Grundherstellung ist immer ein zwingender Prozessschritt. Danach erfolgt die manuelle Produktion der Farbkarten. Die gemischte Farbe wird in spezielle Andruckmaschinen eingebracht und auf Streifen gedruckt. Je nach Druckverfahren unterscheiden sich die dabei eingesetzten Walzen. Evtl. wird die Farbe auch wiederum mit einem Handabroller in Streifen auf das Medium aufgebracht. Danach werden für gut bzw. akzeptabel befundene Stücke ausgestanzt und auf eine Karte geklebt, die die weiteren wichtigen Informationen enthält. Die so manuell erzeugte Karte wird dann zur Druckfreigabe zum Beispiel an den Einkäufer des Druckprodukts zur Freigabe geschickt oder für andere Zwecke archiviert. Der Prozess zur manuellen Erstellung einer Farbkarte ist sehr zeitaufwendig, vor allem dann, wenn das Rezept für die Farbe bereits vorliegt und zu einem späteren Zeitpunkt eine weitere Karte produziert werden muss, da dann die Farbe erneut in kleinen Mengen an gemischt werden muss. Darüber hinaus sind die Toleranzen in diesem manuellen Prozess hoch, da das Resultat beim "Handroller-Verfahren" stark von dem ausgeübten Druck beim Abrollen abhängt. Wird eine einfache Andruckmaschine eingesetzt, so entstehen ebenfalls Abweichungen durch die Menge der eingebrachten Farbe, dem Abnutzungsgrad der Rollen, usw..

Bemühungen, den oben beschriebenen Prozess digital zu gestalten setzen das Vorliegen einer Rezeptierung für die gewünschte Farbe voraus. Wenn durch die Rezepterstellung eine Farbe rezeptiert wurde, ist die erreichbare Farbe und damit ihr Spektrum bekannt. Durch den Einsatz von Proofing Software lässt sich dann auch eine solche Farbe reproduzieren. Ein Proof (oder Prüfdruck) bezeichnet im Druckwesen die vorweggenommene Simulation eines Druckergebnisses zur Revision. In der Praxis versteht man unter einem Proof meist eine Darstellung auf einem zumindest papierartigen Trägermaterial. Mit einem Proof möchte man zu einem möglichst frühen Zeitpunkt innerhalb der Produktionskette simulieren, wie das spätere Druckergebnis aussieht. Hintergrund ist, dass bei den klassischen Druckverfahren wie Offsetdruck, Tiefdruck oder Flexodruck Fehler desto kostenintensiver werden, je später man sie entdeckt. Wenn ein Druckvorlagenhersteller einen Satzfehler bereits am Bildschirm erkennt, kostet es ihn wenige Sekunden und ein paar Tastendrucke, um ihn zu korrigieren. Wird der Fehler dagegen erst entdeckt, wenn der fertig gravierte Tiefdruckzylinder in der Maschine hängt, muss der Auftrag aus der Maschine genommen, korrigiert und später erneut in die Maschine genommen werden. Hierdurch entstehen erhebliche Kosten sowie Probleme in der Produktionsplanung.

Während zum Erkennen einfacher Satzfehler sicherlich noch kein Proof erforderlich ist - schließlich sind sie bereits am Bildschirm oder nach Ausgabe auf einfachen Bürodruckern klar zu beurteilen - gibt es ein Feld, in dem es ganz besonders auf die speziellen Qualitäten von Proofsystemen ankommt: die Farbigkeit.

Grundsätzlich ist es beim Erstellen einer Druckvorlage - was heute in aller Regel am Rechner geschieht - nicht ohne weiteres möglich, das spätere Aussehen des Druckergebnisses exakt vorherzusagen. Bereits die Farben des Bildschirms haben - aufgrund der Tatsache, dass es sich hierbei um einen Selbstleuchter unter Verwendung additiver Farbmischung handelt - ein anderes Aussehen als die des späteren Drucks. Dieser prinzipielle Unterschied kann auch durch Kalibrationstechniken oder Farbmanagement nicht vollständig ausgeglichen werden.

Auch die üblichen Farbdrucksysteme für den Bürobereich sind nicht geeignet, farbverbindliche Drucksimulationen zu erzeugen. Obwohl sie im Prinzip oft mit der gleichen Farbmischtechnik arbeiten wie die klassischen Druckverfahren (subtraktive Farbmischung mit dem CMYK-Farbmodell mit den Primärfarben Cyan, Magenta, Gelb und Schwarz), unterscheiden sich z. B. die Farbörter der Primärfarben Cyan, Magenta, Gelb und Schwarz, das Rasterverfahren zur Halbtonsimulation, die Tonwertveränderung zwischen Datenbestand und Druckergebnis und vieles mehr. Natürlich ist es möglich, mit solchen Druckern eine Ausgabe zu erzielen, die "in etwa" aussieht wie der spätere Druck.

Für professionelle Anwendungen allerdings ist dies völlig unzureichend. Hier kommt es darauf an, vor dem Druck eine genaue Aussage über die spätere Farbigkeit treffen zu können. Auf Basis eines farbverbindlichen Proofs können dann Änderungen der Vorlage besprochen werden, und wenn der Proof zur Zufriedenheit ausfällt, kann er als Contract Proof verwendet werden, also die rechtsverbindliche Vorlage für einen Druckauftrag darstellen. Auf dieser Grundlage können später z. B. auch Reklamationen vorgenommen werden, wenn das Ergebnis des Auflagendrucks zu stark vom Proof abweicht (Delta E Farbabstand).

Gerade hieran wird deutlich, dass ein Proof den Fluss der Farbinformation von Datei oder Film bis hin zum Druck sehr genau vorwegnehmen muss, und das unter Umständen für mehrere Maschinen und mehrere Druckverfahren. Aus dieser Anforderung entwickelte sich die eigenständige Disziplin des Farbmanagement.

Proofverfahren können danach unterschieden werden, ob sie analog oder digital arbeiten. Bei digitalen Proofsystemen wird die Farbanpassung in der Regel über Farbprofile gesteuert (man unterscheidet hier zwischen ICC-basierten und proprietären Farbprofilen). ICC-basierte Systeme sind sehr viel flexibler als analoge Systeme: Durch den einfachen Austausch der Profile können verschiedenste Druckverfahren, Haus- und Branchenstandards wiedergegeben werden. Auch ist es möglich, auf Inkjet-Druckern verschiedenster Hersteller und Bauformen übereinstimmende Ergebnisse zu erreichen.

Allerdings haben digitalen Proof-Druckverfahren leichte Defizite in der Wiedergabequalität nachgesagt. Tiefenzeichnung, Verläufe, schwierige Sonderfarben, Graubalancen und ähnlich anspruchsvolle Bildteile werden von den analogen Proofverfahren meist etwas besser, d. h. dem Auflagendruck ähnlicher, wiedergegeben.

Mit Proofsoftware und einem entsprechend kalibrierten System kann somit eine Farbe auf einem Proofdrucker ausgegeben werden.

Startpunkt ist hier eine spektrale Messung der innerhalb des Rezeptierungsprozesses gemischten Farbe. Für diese Farbe wird dann im nächsten Schritt ein digitales Dokument angelegt, dass neben einem Element, dass die Farbe visualisiert noch weitere Informationen, sogenannte Metadaten, enthalten kann. Diese Metadaten enthalten weitere Informationen für den Anwender wie z.B. Name der Farbe, Druckprozess, Datum, usw. Danach kann die Karte (auch mehrfach) auf einem kalibrierten Proofdrucker mit einer geeigneten Softwarelösung ausgegeben werden. Hierbei muss der Anwender sehr viele notwendige Eingaben und Entscheidungen in geeigneter Weise vornehmen, um eine Farbkarte zu produzieren, die mit der analogen Karte in ihrer Qualität und visuellen Anmutung übereinstimmt. Je nach zu simulierendem Substrat muss ein geeignetes Proof-Medium gewählt werden, dass ähnliche visuelle Eigenschaften wie Glanz und Oberflächenstruktur aufweist oder einen ähnlichen Anteil an optischen Aufhellern enthält. Als nächstes muss ein geeigneter Druckmodus (Auflösung, Geschwindigkeit) festgelegt werden, der es erlaubt den entsprechend notwendigen Farbumfang auf dem gewählten Drucksubstrat zu erreichen. Für die gewählte Kombination aus Proofdrucker, Tinten, Proof-Medium, Druckmodus wird dann eine Profilierung oder Kalibrierung des Systems durchgeführt, um die für die spätere Produktion der Farbkarte notwendigen Informationen über eine passende Mischung der Tinten des Proofdruckers zu gewinnen, mit der sich die gewünschte Farbe darstellen lässt. Als nächster Schritte wird dann, die aus dem Rezeptierungsprozess gewonnene Messung in die Softwarelösung übertragen, indem sie dort in eine Sonderfarb-Datenbank eingepflegt oder ein entsprechendes Profil berechnet wird. Im nächsten Schritt kann das am Anfang des Prozesses erstellte Dokument gedruckt und somit z.B. auch eine Farbkarte produziert werden.

In anderen Worten, das sehr umfangreiche Verfahren zur Erstellung eines Proofdruckes wird dann eingesetzt, um eine einfache Farbkarte digital zu erzeugen. Damit ist ein solches Verfahren überaus komplex und erfordert eine hohe Qualifikation des Bedieners, denn, wie ausgeführt, ist die Erstellung von Proofs sehr aufwändig und erfordert sehr viele Eingaben und Fachkenntnisse.

Die US 2013/0289941 A1 offenbart in diesem Zusammenhang ein Verfahren zur Vorhersage spektraler Charakteristiken bei Farbüberdruckvorgängen und kann bei der Erstellung von Proofs Anwendung finden.

Für den Anwender bleibt die Aufgabe aber weiterhin noch sehr komplex und aufwändig. Nach wie vor sind Prooflösungen in ihrer Benutzerführung so konzipiert, dass sie alle denkbaren Aufgaben oder Anwendungsfälle abdecken. Im Allgemeinen muss der Anwender ca. 35 unterschiedliche Aktionen durchführen, um zu einem Ergebnis zu kommen. Außerdem kommt hinzu, dass der Benutzerkreis, der typischerweise mit der Produktion von Farbkarten beauftragt wird, kein Colormanagement Experte ist. Somit ist er nicht mit der Bedienung einer Prooflösung vertraut und damit durch die Komplexität überfordert. Ein Proofsystem fordert den Bediener Informationen über die geplante Produktionsumgebung einerseits ab, also welches Substrat soll auf welcher Druckmaschine nach welchem Verfahren und mit welchen Farben produziert werden. Andererseits muss die Simulationsumgebung definiert werden, also auf welchem Substrat, welchem kalibrierten z.B. Inkjet-Drucker, mit welchen Farben soll der Proof gedruckt werden. Das Proofsystem stellt dann die Verbindung zwischen diesen beiden Bereichen her und "übersetzt" gewissermaßen.

Ausschlaggebend für die Qualität der Farbkarte ist jedoch die Genauigkeit, mit der das Proofsystem die zu druckende Farbe reproduziert, was bei Verwendung einer Prooflösung letztendlich also die genaueste Kalibrierung des Proofdruckers erforderlich macht.

Ausgehend vom vorbeschriebenen Stand der Technik liegt der vorliegenden Erfindung die Aufgabe zu Grunde, ein Verfahren und eine Vorrichtung bereitzustellen, mit welcher Farbkarten mit hoher Präzision bei sehr geringem Bedieneraufwand hergestellt werden können. Weiterhin soll die Ausgestaltung der Farbkarte flexibler werden.

Zur technischen Lösung dieser Aufgabe schlägt die Erfindung ein Verfahren mit den Merkmalen des Patentanspruches 1 und ein System mit den Merkmalen des Patentanspruchs 8 vor. Weitere Vorteile und Merkmale ergeben sich aus den Unteransprüchen. Die erfindungsgemäße Vorrichtung umfasst die Merkmale des Sachanspruches. Auch hier ergeben sich weitere Vorteile und Merkmale aus den entsprechenden Unteransprüchen.

Gemäß der Erfindung werden wesentliche Parameter des geplanten Farbkartendrucks ermittelt und in einer Datenbank zur Verfügung gestellt. Diese Datenbank wird als "Substratdatenbank" bezeichnet. Wird vom Bediener eine zu druckende Farbe angegeben, wird von ihm auch ein gewünschtes Substrat ausgewählt. Aufgrund der zum Teil empirischen Vorgaben in der Datenbank wird nun vom Rechnersystem automatisch der wesentliche Teil der Druckparameter zugeordnet und vorgegeben. Aus einer Schablonendatenbank, die Formate für Schablonen speichert, wird vom Anwender die Farbkarte ausgewählt. Aufgrund der Vorgaben und ggf. weiterer Angaben zum zur Verfügung stehenden Drucker wird dann vom System die Farbkarte gedruckt.

Die dem Bediener abverlangten Eingaben sind auf ein Minimum reduziert. Schablonen können beliebig gestaltet und hinterlegt werden.

Die Substratdatenbank enthält die für den Prozess wichtigen und notwendigen Eigenschaften der realen Produktionsumgebung, die gekennzeichnet ist durch das verwendete Drucksubstrat, Druckverfahren bzw. -maschine und die rezeptierte Farbe, und ihre Übertragung in die Simulationsumgebung, so wie sie für einen Proof zusammengestellt werden. In der Spalte P der unten stehenden Tabelle sind Eigenschaften aus der Produktionsumgebung markiert. Diese fließen als Parameter in die Berechnung des Farbprofils im Schritt ein, werden als rechnerisch in die Simulationswelt übertragen. Entsprechend sind in der Spalte S Eigenschaften markiert, für die bereits eine entsprechende Übertragung stattgefunden hat. In der Datenbank sind also Eigenschaften definiert, die für die Simulation als optimal vordefiniert sind (und nicht direkt in Berechnungen einfließen).

| **Eigenschaft** | **P** | **S** | **Verwendung/Bedeutung** | **Bemerkungen** |
|---|---|---|---|---|
| ID | | | Eindeutige Identifizierung des Eintrags | |
| Bezeichnung | | | Anzeige in der Benutzeroberfläche | |
| Papierfärbung | x | | Papiertonsimulation des Druckprofils | Reflektionsspektrum des unbedruckten Mediums |
| OBA | x | | Berechnung der Tonwertabstufung der zu simulierenden Farbe | Fluoreszenz des Originalsubstrats durch optische Aufheller |
| Weitere Eigenschaften des Originalmaterials wie z.B. Oberflächenglanz | x | | Berechnung der Tonwertabstufung und Dichtevariationen der zu simulierenden Farbe | Klassifizierung des Originalsubstrats in: gestrichen, ungestrichen, glänzend, usw. |
| Medium | | X | Medium für die Farbkarte | Vorausgewähltes Medium, dessen Eigenschaften (Glanz, Struktur, OBA) dem Originalsubstrat am nächsten entsprechen |
| Rauschen | | X | Simulation des unregelmäßigen Farbannahmeverhalten des Originalsubstrat | Die gedruckte Farbschicht liegt nicht immer ''glatt' auf dem Originalsubstrat (z.B. bei offener Oberfläche wie Wellpappe) |
| Papierstruktur | | x | Simulation der Fasereigenschaften bzw. des Oberflächenbilds des Originalsubstrat | Strukturbild (gescannt oder berechnet) der Originalpapierstruktur |
| Eigenschaften der Druckfarbe wie Glanz der Farbe auf dem Originalmedium | x | | Berechnung der Tonwertabstufung und Dichtevariationen der zu simulierenden Farbe | |
| Druckverfahren | X | | Berechnung der Tonwertabstufung und Dichtevariationen der zu simulierenden Farbe | Druckprozess wie Offset, Flexo, UV Flexo, usw. |
| Tonwertzuwachskurve | x | | Berechnung der Tonwertabstufung und Dichtevariationen der zu simulierenden Farbe | Optischer und mechanischer Tonwertzuwachs eines gerasterten Tonwertes gegenüber seinem nominalen Wert |
| Drucker/Druckmodus | | x | Drucker und Druckmodus zur Produktion der Farbkarte | Vordefinierter Drucker und optimaler Druckmodus zur Simulation der Farbkarte |
| Gamut, Farbumfang des Systems | | x | Abschätzung der Erreichbarkeit der zu simulierenden Farbe, Berechnung des Druckprofils | Tabelle der erreichbaren Farborte aller Mischungen der Tinten des Druckers bei gegebenem Medium und Druckmodus |

Weitere Vorteile und Merkmale ergeben sich aus der folgenden Beschreibung anhand der Figuren. Dabei zeigen
- Fig. 1: ein Beispiel für eine Farbkarte nach dem Stand der Technik;
- Fig. 2: ein Flussdiagramm zur Veranschaulichung des erfindungsgemäßen Prozesses;
- Fig. 3: eine schematische Darstellung einer Vorrichtung zur Verfahrensdurchführung und
- Fig. 4: Darstellungen von erfindungsgemäß hergestellten Farbkarten.

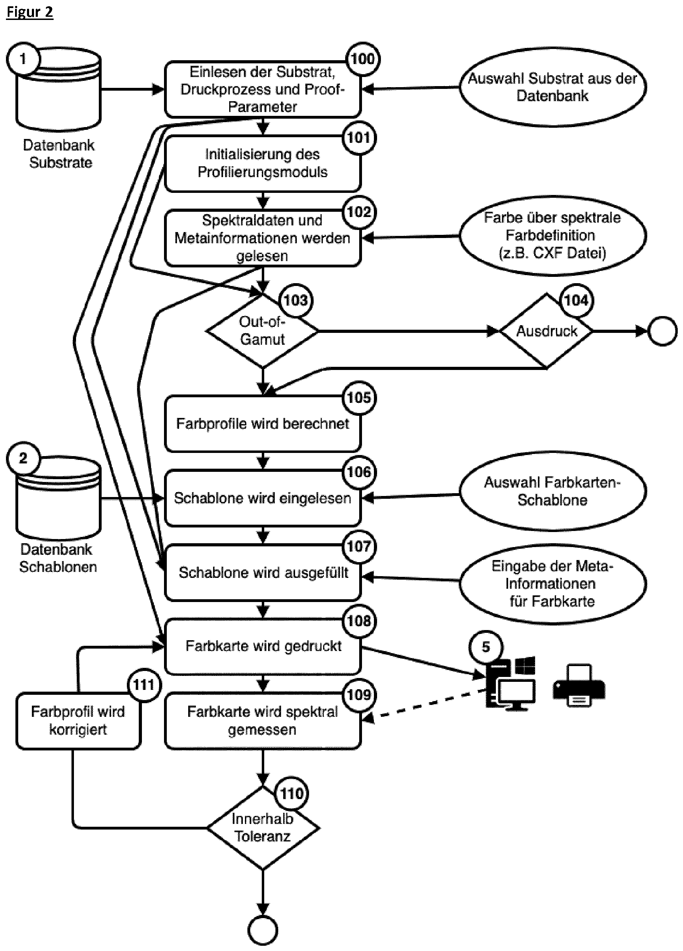

Mit Bezug auf Figur 2 wird im Folgenden ein Beispiel für einen erfindungsgemäßen Verfahrensablauf erläutert.

Im ersten Schritt 100 wählt der Benutzer oder ein externes System ein Substrat aus der Substratdatenbank (1) aus. Dadurch werden alle in der Datenbank enthaltenen Informationen für diese Auswahl gelesen und in den folgenden Prozessschritten verwendet.

Im nächsten Schritt 101 erfolgt die Initialisierung eines sogenannten Profilierungsmoduls mit den notwendigen aus der Datenbank gelesenen Eigenschaften. Das Profilierungsmodul wird benutzt, um in den folgenden Schritten farbmetrische Berechnungen durchzuführen.

Im nächsten Schritt 102 erfolgt die Eingabe der spektralen Farbinformation der zu simulierenden Farbe in das Verfahren. Diese Eingabe kann entweder direkt vom Benutzer über die Benutzeroberfläche vorgenommen werden. Dabei kann das normierte CXF Datenformat zur Anwendung kommen. Es ist auch eine systematische Abfrage dieser Information aus einer angeschlossenen Farbdatenbank denkbar oder ähnliches. Aus dieser Eingabe werden das Reflektionsspektrum und weitere Metainformation, wie beispielsweise der Name der Farbe gelesen. Die Metainformationen werden in einem späteren Verfahrensschritt (107) zum Ausfüllen der Farbkartenschablone benutzt.

Anhand der Kenntnis des Farbumfangs des Ausgabesystems (aus Schritt 100) und der spektralen Beschreibung der zu simulierenden Farbe kann die Entscheidung getroffen werden, ob die Farbe auf dem Ausgabesystem darstellbar ist und wenn nicht, mit welcher Abweichung gerechnet werden muss, Schritt 103.

Anhand dieser Abweichung wird die Entscheidung getroffen, ob er Prozess weitergeführt oder an diesem Schritt beendet wird. Diese Entscheidung kann entweder durch den Benutzer des Systems erfolgen oder systematisch anhand eines Regelwerks (Schritt 104).

Als nächstes erfolgt die Berechnung eines sogenannten Farbprofils 105. Dieses Farbprofil enthält die notwendige Definition, wie die zu simulierende Farbe mittels der sich im Ausgabesystem befindlichen Tinten dargestellt werden kann. Das Farbprofil kann darüber hinaus Anweisungen enthalten, wie die zu simulierende Papierfärbung auf dem Ausgabesystem erreicht wird. Ebenso können Informationen über Tonwertabstufungen der Farbe und ihrer Simulation enthalten sein. Bei den Berechnungen werden natürlich Papier und druckspezifische Parameter aus Schritt (100) berücksichtigt. Exemplarisch ist dies zum Beispiel das im Druck verwendete Rasterverfahren und dessen kennzeichnende Parameter. Weiterhin können Informationen darüber enthalten sein, wie sich die zu simulierende Farbe unter Änderung ihres Schichtdickenauftrags oder ihrer Druckdichte auf dem Substrat ändert, so dass diese Information zur Produktion einer Toleranzkarte oder ähnlichem benutzt werden kann.

Nach der Auswahl der zu druckenden Schablone durch den Benutzer oder systematisch, wird diese eingelesen (Schritt 106). Neben den Layout Informationen, werden auch die zu druckenden Metadatenfelder eingelesen bzw. bestimmt, welche im Schritt 107 ausgefüllt werden.

Im Schritt 107 werden die Metadatenfelder der Schablone ausgefüllt. Die dafür notwendigen Daten sind entweder aus vorhergegangen Schritten bekannt (z.B. Name der Farbe aus Schritt 102) oder werden über eine Benutzeroberfläche vom Bediener abgefragt. Es ist auch denkbar, dass die Daten für die Metafelder durch Abfragen aus einem externen System abgefragt werden. Die ausgefüllte Schablone wird in einem geeigneten Format an den nächsten Schritt (108) weitergereicht. Exemplarisch kann dies mit Hilfe eines PDF Dokuments erfolgen, welches in diesem Schritt (107) aus der Schablone aufgebaut und druckfertig weitergereicht wird.

Im Schritt 108 erfolgt dann der Ausdruck der Farbkarte. Dabei werden alle notwendigen Daten (Dokumente, Profile, Einstellungen) an die Ausgabestation (5) weitergereicht. Hierbei kommen unter anderem die in der Substrat-Datenbank gespeicherten und in Schritt (100) eingelesen Parameter zum Einsatz. An die Ausgabestation werden das zu verwendende Proof-Medium, die Einstellungen für den Druckmodus sowie weitere Parameter, die für die Substrat-Simulation benötigt werden, übermittelt. Mit dem aus (105) berechneten Farbprofil wird der Ausdruck für das Farbkartendokument aus (107) gestartet. Die Ausgabestation produziert die Farbkarte gemäß den übermittelten Anweisungen.

Der Schritt 109 führt eine Qualitätskontrolle der Farbkarte durch. Dabei wird die auf der Farbkarte gedruckte Simulation der Farbe spektral vermessen. Dies kann automatisiert durch die Ausgabestation erfolgen. Die Position, an der die Messung erfolgen soll, wird dabei im Schritt 108 an die Ausgabestation übermittelt und wurde vorher aus den Layoutinformationen bestimmt. Alternativ kann die Messung auch mit einem externen Spektralphotometer erfolgen und in das System zurückgeführt werden.

Der nächste optionale Schritt (110) vergleicht die gedruckte Farbe gegen die Referenz aus Schritt 102. Dabei werden die beiden spektralen Farborte mit einer geeigneten Farbabstandformel (z.B. deltaE 2000) verglichen. Ist der Abstand größer als eine vordefinierte Schwelle kann Schritt 111 ausgeführt werden, um den Farbabstand zur Referenz zu verkleinern und damit die Qualität der Karte zu erhöhen. Zeigt die Überprüfung keine außerhalb der Toleranz liegenden Abweichung auf (oder wurde als optionaler Schritt nicht durchgeführt) ist die Produktion der Farbkarte abgeschlossen.

Der Schritt 111 übernimmt die aus Schritt (109) gewonnene Information über die aktuell realisierte Übereinstimmung zur Referenz und verändert das in (105) berechnete

Farbprofil. Dabei wird mit einem geeigneten Verfahren eine verbesserte Darstellung für die Referenzfarbe aus den Tinten des Proofsystems berechnet. Das so veränderte Farbprofil wird in Schritt (108) zum erneuten Ausdrucken der Farbkarte verwendet.

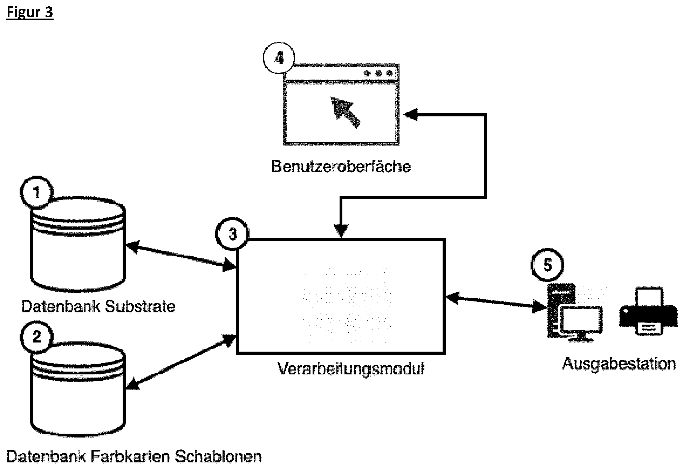

Figur 3 zeigt die Komponenten zur Durchführung des Verfahrens. Die wesentlichen Komponenten des Verfahrens sind eine Substrat-Datenbank (1), eine Datenbank (2) mit Schablonen für die zu druckende Farbkarten, ein Verarbeitungsmodul (3), eine Ausgabestation (5) mit Proofdrucker und die Benutzeroberfläche (4) zum Beispiel im Internetbrowser des Anwenders.

Die Substratdatenbank (1) stellt ein wesentliches Element des Systems dar. Sie fasst alle notwendigen Substrat-, Druckprozess- und Proof-Parameter zusammen. Wesentliche Parameter für das Original-Drucksubstrat, das durch die Farbkarte simuliert wird, sind beispielsweise Oberflächeneigenschaften des Substrats wie Glanz, Farbabnahme, Struktur und Färbung des Materials. Diese Eigenschaften werden innerhalb des Verfahrens entweder zu Berechnung der Farbsimulationsprofils verwendet oder zur Steuerung des Ausdrucks, um wolkenartige Farbannahme oder Struktur des Substrats zu simulieren. Weiterhin sind in einem Substrateintrag auch allen notwendigen Parameter für die Proofausgabe definiert. Wichtige Einträge sind hier beispielsweise das Proof-Medium, der Druckmodus und eine spektrale Beschreibung des Ausgabefarbraums, der sich durch diese Kombination erzielen lässt. Auch sind Informationen über druckprozessspezifische Eigenschaften wie Rasterung, Tonwertzuwachs oder Lackierung enthalten. Die Datenbank lässt sich entweder für herstellerspezifische Substrate oder für Klassen von Substraten aufbauen.

Die Datenbank (2) mit den Schablonen der möglichen Varianten der Farbkarten enthält Informationen über das Layout der Karte, über die Anzahl der darzustellenden Farben und deren technische Aufgabe (z.B. Vollton, Tonwertabstufung, Schichtdickenvariante, usw.) und über die auf der Karte dargestellten Metainformationen. Für die Metainformationen wird darüber hinaus die Quelle, aus der die Informationen bezogen werden, definiert, so dass die Felder auf der Karte automatisiert ausgefüllt werden können.

Das Verarbeitungsmodul (3) stellt den aktiven Teil des Systems dar und kontrolliert und steuert die anderen Module während der Produktion der Farbkarte.

An der Ausgabestation (5) ist ein Proofdrucker angeschlossen. Die Ausgabestation kontrolliert den Druckprozess und stellt dem Verarbeitungsmodul die notwendigen Informationen zur Verfügung (z.B. geladenes Proofmedium, Druckfortschritt oder ähnliches). Die Ausgabestation übernimmt auch die Kalibration des Proofdruckers. Dabei wird die Ausgabequalität des Proofdruckers im Zusammenspiel mit dem geladenen Proofmedium überprüft. Im Fall, dass sich eine außerhalb der definierten Toleranz liegende Abweichung der farblichen Wiedergabe ergibt, wird das Ausdruckverhalten entsprechend gegengesteuert. Dabei wird der Farbraum des Proofdruckers an geeigneten Farborten spektral vermessen und mit einer entsprechenden Referenz verglichen.

Über die Benutzeroberfläche (4) interagiert der Anwender mit dem System und stellt entsprechend Druckaufträge für Farbkarten in das System ein. Die Benutzeroberfläche ist nur ein Beispiel für die mögliche Interaktion mit dem System. Es ist auch eine automatisierte Benutzung denkbar. In diesem Fall werden die notwendigen Eingaben automatisiert von einem Drittsystem übergeben und damit ein Druckauftrag ausgelöst.

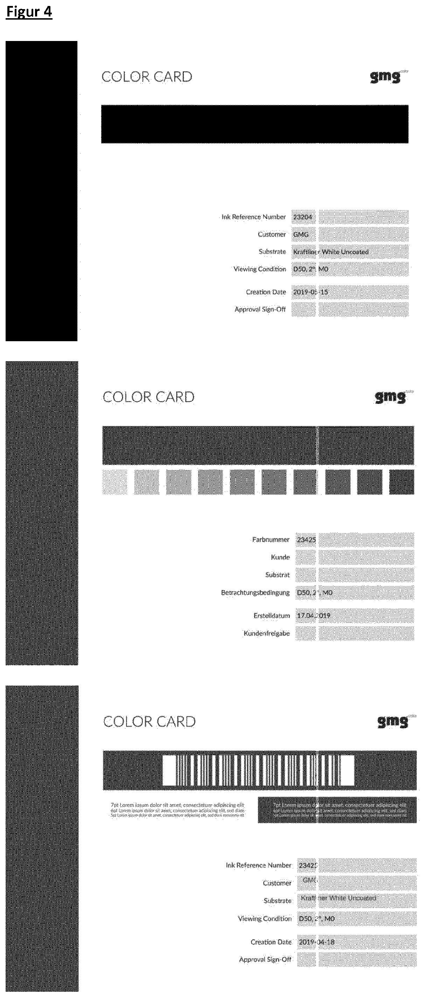

In Figur 4 sind einige Varianten für Farbkarten gezeigt, wie sie nun durch das Verfahren ermöglicht sind. Wie ausgeführt gibt ein Bediener nur wenige Werte vor, nämlich die Farbe und das Substrat, ggf. den Drucker. Alle weiteren Parameter und notwendigen Verarbeitungsschritte werden aufgrund der Datenbankinformationen vom Rechner ergänzt. Konkret ist mit der Auswahl des Druckmediums ein Datenbankeintrag verknüpft, der alle weiteren Parameter, die für den Druck notwendig sind, enthält. Exemplarisch sind das, das optimale Proofmedium, druckverfahrensspezifische Einstellungen (z.B. Tonwertzuwachskurven) und substratspezifische Einstellungen (z.B. Einfärbung des Substrats, Parameter zur Simulation der Oberfläche, usw.).

Im Weiteren erlaubt das Verfahren Farbkarten zu drucken, die im manuellen Verfahren nicht oder nur sehr aufwendig herstellbar sind. Es können Karten hergestellt werden, die einen gerasterten Tonwertverlauf der Farbe darstellen oder es können Karten gedruckt werden die einen Barcode oder andere Textelemente (wie zum Beispiel kleinen negativen Text) aufweisen. Dies ist vorteilhaft, da dann neben der Farbe auch Aspekte der Lesbarkeit mit kommuniziert und in eine Entscheidung über die Verwendung der Farbe miteinfließen können.

Durch die Verwendung eines geeigneten physikalischen Druckmodells (z.B. GMG OpenColor Technologie) ist es auch möglich Toleranzkarten zu drucken. Sie weisen eine Toleranzspanne auf, die im Druck durch Schwankungen des Farbauftrags entstehen. Sie lassen sich aus Kenntnis des Druckverfahrens, des Mediums und dem spektralen Verlauf der Farbe berechnen.

## Patentansprüche

1. Verfahren zur automatisierten digitalen Erstellung von Farbkarten mittels eines Rechnersystems, das Zugriff auf eine Datenbank hat sowie der Ansteuerung eines Druckers dient,
wobei von einer Bedienperson ausgewählt werden :
- eine Farbe, für welche die Farbkarte erzeugt werden soll und für welche eine spektrale Farbdefinition vorliegt,
- ein Substrat, auf dem die Farbkarte gedruckt werden soll,
- ein Drucker, auf dem die Farbkarte gedruckt werden soll,
- eine Schablone, nach deren Format die Farbkarte gedruckt werden soll,
wobei aufgrund der Vorgaben für Farbe, Substrat und Drucker aus einer zur Verfügung gestellten Substratdatenbank, die aus empirisch ermittelten und gemessenen Werten aufgebaut ist, alle für einen Druck erforderlichen Daten zugeordnet werden, die für eine Umrechnung von Farbraumwerten zur Berechnung des Farbprofils bei einer vorgegebenen Farbe und deren Ausdruck erforderlich sind,
wobei aufgrund der Vorgaben für die Schablone die Layout-Informationen aus einer Schablonendatenbank eingelesen,
und die Farbkarte ausgedruckt wird.

2. Verfahren nach Anspruch 1, **dadurch gekennzeichnet, dass** die Farbkarte nach dem Ausdruck spektral gemessen und die Messergebnisse zur Korrektur des Farbprofils verwendet werden.

3. Verfahren nach einem der vorhergehenden Ansprüche, **dadurch gekennzeichnet, dass** anhand der Farbdefinition und des Farbumfangs des Ausgabesystems ermittelt wird, ob die Farbe auf dem Ausgabesystem darstellbar ist.

4. Verfahren nach einem der vorhergehenden Ansprüche, **dadurch gekennzeichnet, dass** in der Datenbank Werte zur Papiersimulation bereitgestellt und bei der Berechnung des Farbprofils berücksichtigt werden.

5. Verfahren nach einem der vorhergehenden Ansprüche, **dadurch gekennzeichnet, dass** in der Datenbank Werte zur Simulation des unregelmäßigen Farbannahmeverhaltens des Originalsubstrates bereitgestellt und bei der Berechnung des Farbprofils berücksichtigt werden.

6. Verfahren nach einem der vorhergehenden Ansprüche, **dadurch gekennzeichnet, dass** in der Datenbank Werte zur Simulation der Oberflächenstruktur des Originalsubstrates bereitgestellt und bei der Berechnung des Farbprofils berücksichtigt werden.

7. Verfahren nach einem der vorhergehenden Ansprüche, **dadurch gekennzeichnet, dass** in der Datenbank Werte zur Berechnung der Tonwertabstufung und Dichtevariation der zu simulierenden Farbe bereitgestellt und bei der Berechnung des Farbprofils berücksichtigt werden.

8. System zur automatisierten digitalen Erstellung von Farbkarten umfassend
ein Rechnersystem, das Zugriff auf eine Datenbank hat sowie der Ansteuerung eines Druckers dient,
eine Substratdatenbank, die aus empirisch ermittelten und gemessenen Werten aufgebaut ist und Vorgaben für Farbe, Substrat und Drucker alle für einen Druck erforderlichen Daten zuordnet, die für eine Umrechnung von Farbraumwerten zur Berechnung des Farbprofils bei einer vorgegebenen Farbe und deren Ausdruck erforderlich sind,
eine Schablonendatenbank mit Layoutinformationen für Farbkarten-Schablonen, wobei das Rechnersystem so eingerichtet ist, dass es von einer Bedienperson bereitgestellte Vorgaben für Farbe, Substrat, Drucker und Schablone unter Verwendung der Substrat- und Schablonendatenbanken zur Berechnung eines Farbprofils und dem Ausdruck einer Farbkarte gemäß einem Verfahren nach einem der vorangehenden Ansprüche umsetzt.

## Claims

1. Method for the automated digital creation of colour charts using a computer system that has access to a database and is used to control a printer,
wherein an operator selects:
- a colour for which the colour chart is to be created and for which a spectral colour definition is available,
- a substrate on which the colour chart is to be printed,
- a printer on which the colour chart is to be printed,
- a template according to whose format the colour chart is to be printed,
whereby, based on the specifications for colour, substrate and printer, all data required for printing is assigned from a substrate database provided, which is constructed from empirically determined and measured values, and which is required for converting colour space values to calculate the colour profile for a specified colour and its printout,
whereby, based on the specifications for the template, the layout information is read in from a template database,
and the colour chart is printed.

2. Method according to claim 1, **characterised in that** the colour chart is measured spectrally after printing and the measurement results are used to correct the colour profile.

3. Method according to one of the preceding claims, **characterised in that** the colour definition and colour gamut of the output system are used to determine whether the colour can be reproduced on the output system.

4. Method according to one of the preceding claims, **characterised in that** values for paper simulation are provided in the database and taken into account when calculating the colour profile.

5. Method according to one of the preceding claims, **characterised in that** values for simulating the irregular colour acceptance behaviour of the original substrate are provided in the database and taken into account when calculating the colour profile.

6. Method according to one of the preceding claims, **characterised in that** values for simulating the surface structure of the original substrate are provided in the database and taken into account when calculating the colour profile.

7. Method according to one of the preceding claims, **characterised in that** values for calculating the tonal gradation and density variation of the colour to be simulated are provided in the database and taken into account when calculating the colour profile.

8. System for the automated digital creation of colour charts, comprising
a computer system that has access to a database and is used to control a printer,
a substrate database, which is constructed from empirically determined and measured values and assigns specifications for colour, substrate and printer to all data required for printing, which are necessary for converting colour space values to calculate the colour profile for a given colour and its printout,
a template database with layout information for colour chart templates,
wherein the computer system is set up so that it implements specifications for colour, substrate, printer and template provided by an operator using the substrate and template databases to calculate a colour profile and print a colour chart in accordance with a method according to one of the preceding claims.

## Revendications

1. Procédé pour la création numérique automatisée de nuanciers à l'aide d'un système informatique qui a accès à une base de données et sert à commander une imprimante,
dans lequel un opérateur sélectionne :
- une couleur pour laquelle le nuancier doit être créé et pour laquelle une définition spectrale de la couleur est disponible,
- un substrat sur lequel le nuancier doit être imprimé,
- une imprimante sur laquelle le nuancier doit être imprimé,
- un gabarit selon le format duquel le nuancier doit être imprimé,
toutefois, sur la base des spécifications relatives à la couleur, au substrat et à l'imprimante, toutes les données nécessaires à l'impression sont attribuées à partir d'une base de données de substrats mise à disposition, qui est constituée de valeurs déterminées et mesurées empiriquement, et qui sont nécessaires à la conversion des valeurs de l'espace colorimétrique pour le calcul du profil de couleur pour une couleur donnée et son impression,
les informations de mise en page sont lues à partir d'une base de données de gabarits sur la base des spécifications du gabarit,
et la carte de couleurs est imprimée.

2. Procédé selon la revendication 1, **caractérisé en ce que** la carte de couleurs est mesurée spectralement après l'impression et les résultats de mesure sont utilisés pour corriger le profil de couleur.

3. Procédé selon l'une des revendications précédentes, **caractérisé en ce que** la définition des couleurs et la gamme de couleurs du système de sortie sont utilisées pour déterminer si la couleur peut être représentée sur le système de sortie.

4. Procédé selon l'une des revendications précédentes, **caractérisé en ce que** des valeurs pour la simulation du papier sont fournies dans la base de données et prises en compte lors du calcul du profil de couleur.

5. Procédé selon l'une des revendications précédentes, **caractérisé en ce que** des valeurs pour la simulation du comportement irrégulier d'absorption de la couleur du substrat original sont fournies dans la base de données et prises en compte lors du calcul du profil de couleur.

6. Procédé selon l'une des revendications précédentes, **caractérisé en ce que** des valeurs pour la simulation de la structure de surface du substrat original sont fournies dans la base de données et prises en compte lors du calcul du profil de couleur.

7. Procédé selon l'une des revendications précédentes, **caractérisé en ce que** des valeurs permettant de calculer la gradation des tons et la variation de densité de la couleur à simuler sont fournies dans la base de données et prises en compte lors du calcul du profil de couleur.

8. Système pour la création numérique automatisée de nuanciers comprenant
un système informatique qui a accès à une base de données et sert à commander une imprimante,
une base de données de substrats, qui est constituée de valeurs déterminées et mesurées empiriquement et qui attribue à la couleur, au substrat et à l'imprimante toutes les données nécessaires à l'impression, qui sont nécessaires à la conversion des valeurs de l'espace colorimétrique pour le calcul du profil de couleur pour une couleur donnée et son impression,
une base de données de gabarits contenant des informations de mise en page pour les gabarits de nuanciers,
le système informatique étant configuré de manière à mettre en œuvre les spécifications fournies par un opérateur pour la couleur, le substrat, l'imprimante et le gabarit à l'aide des bases de données de substrats et de gabarits afin de calculer un profil de couleur et d'imprimer une carte de couleurs selon un procédé conforme à l'une des revendications précédentes.
